# EUROPÄISCHE PATENTANMELDUNG

(11) **EP 1 345 309 A2**
(43) Veröffentlichungstag der Anmeldung: **17.09.2003**
(21) Anmeldenummer: 03001581.2
(22) Anmeldetag: 24.01.2003
(51) Int. Cl.: H02K 9/06, H02K 9/22

(54) **Elektro-Handwerkzeugmaschine mit Kühlerlüfter**

(30) Priorität: 16.03.2002 DE 10211694
(71) Anmelder: ROBERT BOSCH GMBH, 70442 Stuttgart (DE)
(72) Erfinder: Renner, Monika, 70771 Leinfelden-Echterdingen (DE); Fuchs, Frank, 71277 Rutesheim (DE); Simon, Rudolf, 4704 Niederbipp (CH)

(57) **Zusammenfassung**

Eine Elektro-Handwerkzeugmaschine mit einem Gehäuse (12), das einen Elektromotor (14, 140, 141) aufnimmt, der einen Rotor (16) mit Wickelkopf (17) und einem drehsicher befestigten Ventilator aufweist, der eng benachbart zum Wickelkopf (17) sitzt, wird dadurch kostengünstiger herstellbar, leichter und robuster, dass sich der Ventilator (32) zumindest bereichsweise axial bis unmittelbar an die Stirnseite des Wickelkopfs (17) erstreckt - zumindest im radial äußeren Bereich des Wickelkopfes.

## Beschreibung

### Stand der Technik

Die vorliegende Erfindung geht aus von einer Elektrohandwerkzeugmaschine nach dem Oberbegriff des Anspruchs 1.

Durch das Patent US 2 319 194 ist ein Elektromotor bekannt, dessen Rotor auf seinem Wickelkopf einen Käfig trägt. Dieser ist etwas umständlich zu montieren und hält sich radial aussen in den Ankernuten des Rotors fest, stützt sich dabei axial am Wickelkopf ab. Er dient in erster Linie als Abweiser und Prallschutz gegen abrasives Staubmaterial, das insbesondere beim Bearbeiten von Beton und Stein vom Kühllüfter eingesaugt wird und mit hoher Geschwindigkeit auf die Wikkelköpfe auftrifft. In zweiter Linie dient der Käfig als Ventilator, der aufgrund seiner groben Toleranzen leistungsbegrenzt und als Hochleistungsventilator ungeeignet ist.

Bei nicht vorhandenem Schutz des Wickelkopfes kann die elektrische Isolierung der Rotorwicklung derart stark beschädigt werden, dass der Elektromotor funktionsunfähig wird.

Bei anderen Handwerkzeugmaschinen ist der Rotor, insbesondere der Wickelkopf, durch verhältnismäßig aufwendig aufzubringende, käfigartige Wickelbandagen gegen abrasiven Staub geschützt, wobei zusätzlich axial benachbart zum Rotor auf dessen Motorwelle ein Hochleistungs-Kühlventilator angeordnet ist, der durch Einlassschlitze des Gehäuses Aussenluft ansaugt, zwischen Stator und Rotor hindurch und am Wickelkopf vorbei saugt und nach aussen drückt.

### Vorteile der Erfindung

Die vorliegende Erfindung mit den Merkmalen des Anspruchs 1 hat den Vorteil, dass auf die bisher bekannten Mittel zum Schutz des Rotors gegen abrasiven Staub verzichtet werden kann und dass stattdessen der Kühlerlüfter durch seine besondere Ausgestaltung diese Funktion übernimmt.

Dadurch, dass der Kühllüfter berührungsnah am Wickelkopf sitzt, bildet er selbst einen Aufprallschutz gegen abrasiven Staub und verlängert die Maschinenlebensdauer.

Dadurch, dass die Rotorseite des Ventilators mit minimalem Spaltabstand eng der Kontur des Wickelkopfs folgt, ist dieser über seine gesamte Erstreckung mit einfachen Mitteln wirksam gegen abrasiven Staub geschützt.

Dadurch, dass, insbesondere anstelle von Ventilatorblättern, axiale Stäbe an der Ventilatoraussenkante angeordnet sind, ist der Schutz des Wickelkopfes durch die von den Stäben bewirkte Luftverwirbelung, verbunden mit dem köperlichen Aufprallschutz durch die Stäbe selbst, einfach, kostengünstig und effektiv.

Dadurch, dass die Stäbe auf einem Teilkreis angeordnet sind, dessen Durchmesser größer als der Außendurchmesser des Rotors ist, sind Staubabweisung und Kühlluftabtransport sicher gewährleistet.

Dadurch, dass der Ventilator ein Stufenventilator mit axial vorstehenden Radialventilatorblättern ist, die den kleinen Zylinder bilden und die mit ihren Stirnseiten der Kontur des Wickelkopfs folgen, wird eine besonders wirksame Luftströmung um den Wickelkopf erzeugt. Dadurch wird antrömende Kühlluft mit abrasivem Staub vom Wickelkopf abgewiesen, ohne diesen zu berühren.

### Zeichnung

Nachstehend ist die Erfindung anhand eines Ausführungsbeispiels mit einer zugehörigen Zeichnung erläutert.

Es zeigen
Figur 1 den Teillängsschnitt einer Elektro-Handwerkzeugmaschine
Figur 2 eine räumliche Darstellung des neuen Lüfterrades
Figur 3 eine schematische Darstellung des Elektromotors mit stufenzylindrischen Ventilator und
Figur 4 eine weitere schematische Darstellung mit einem anderen Ventilatortyp.

### Ausführungsbeispiel

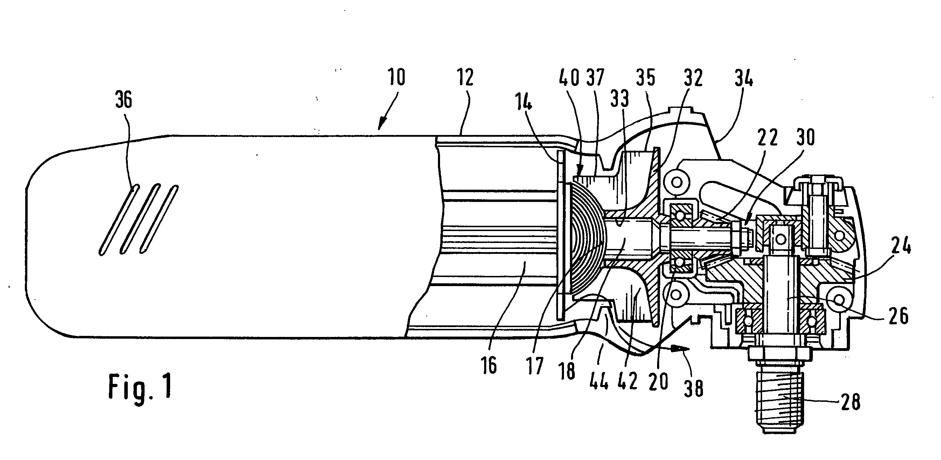

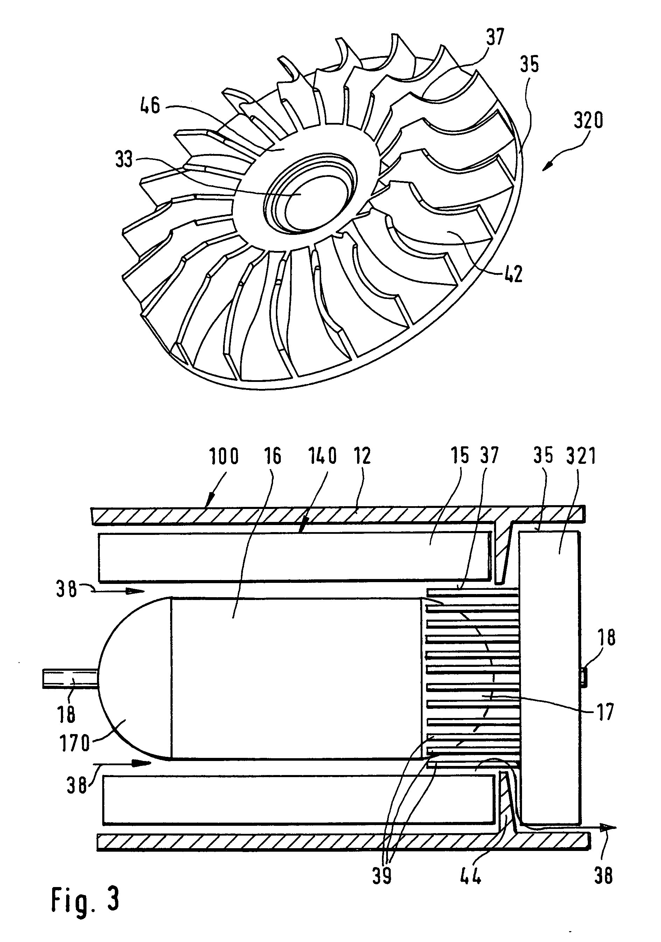

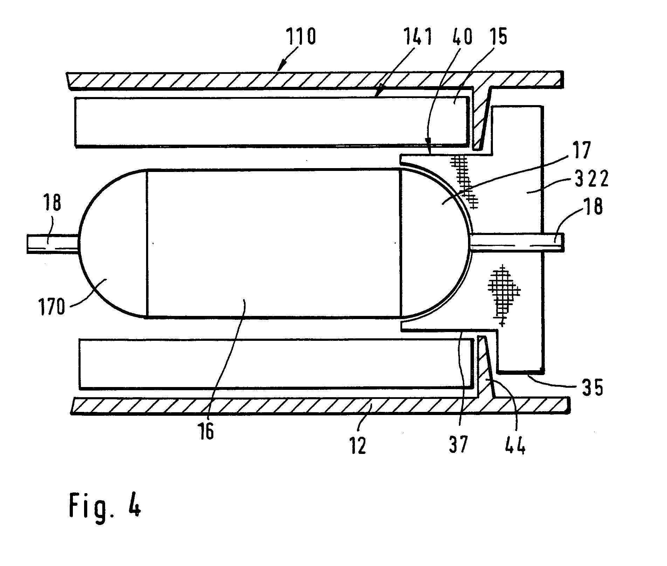

Figur 1 zeigt einen Längsschnitt eines Winkelschleifers 10 mit einem Gehäuse 12, das einen Elektromotor 14 aufnimmt. Dieser besteht aus einem Stator 15, der konzentrisch einen Rotor 16 umgreift. Der Rotor 16 hat - in Betrachtungsrichtung rechts - einen gewölbten Wickelkopf 17, der in einen zylindrischen Bereich gemäß Figuren 3 und 4 übergeht.

Der Rotor 16 hat eine zentrale Motorwelle 18, deren vorderes Ende in einem vom Gehäuse 12 getragenen Lager 20 drehbar gelagert ist, wobei zwischen dem Lager 20 und dem Wickelkopf 17 ein Ventilator 32 auf der Motorwelle 18 sitzt.

Auf der dem Ventilator 32 entgegengesetzten Seite des Lagers 20 sitzt auf der Motorwelle 18 ein Motorritzel 22, das mit einem Tellerrad 24 kämmt, das drehfest auf einer zweifach gelagerten Abtriebswelle 26 sitzt.

Die Abtriebswelle 26 trägt an ihrem freien Ende ein Gewinde 28 zum Anschrauben einer nicht dargestellten Sicherungsmutter, die eine nicht dargestellte Schleifscheibe als Arbeitswerkzeug drehfest und axial spielfrei auf der Abtriebswelle 26 festhält.

Der Ventilator 32 hält sich mit einer zentrale Bohrung 33 drehfest an der Motorwelle 18 fest und ist als Stufenzylinder ausgestaltet. Er besteht aus einem großen Zylinder 35 und einem sich axial nach links anschließenden kleinen Zylinder 37 und er saugt Aussenluft durch Lufteintrittsschlitze 36 im hinteren Bereich des Gehäuses 12 zwischen dem Rotor 16 und dem Stator 15 hindurch und drückt durch obere und untere Luftaustrittsschlitze 34 die erwärmte Kühlluft ins Freie - entsprechend dem Strömungspfeil 38.

Der Ventilator 32 hat auf der dem Wickelkopf 17 benachbarten Seite einen Axialüberstand 40, der aus Ventilatorflügel 42 gebildet wird. Diese Ventilatorflügel 42 verwirbeln die Umgebungsluft des Wickelkopfes 17 radial nach aussen und bilden einen Luftschleier, der sowohl den Wickelkopf 17 kühlt als auch staubabweisend wirkt und diesen entlang dem Strömungspfeil 38 nach aussen befördert.

Das Gehäuse 12 trägt im Bereich des Ventilators 32 eine radial nach innen ragende Leitrippe 44, die die Kühlluft bogenförmig nach innen umlenkt und damit deren Strömungsverhalten - rascher Austritt und Staubabtransport - verbessert.

Figur 2 zeigt einen Ventilator 320 mit axial und radial gekrümmten Lüfterflügeln 42, die - von der Seite betrachtet - einen Stufenzylinder mit großem Zylinder 35 und kleinem Zylinder 37 bilden. Die mittige Bohrung 33 des Ventilators 32 geht radial nach aussen in eine der Negativkontur des Wikkelkopfs 17 entsprechende Innenkalotte 46 konkav gekrümmt über.

Figur 3 zeigt eine schematische Darstellung eines Elektromotors 140, der in seinem Gehäuse 12 sitzt und dessen Stator 15 einen Rotor 16 konzentrisch umgreift.

Der Rotor 16 hat einen hinteren Wickelkopf 170 und den vorderen Wickelkopf 17, die beide eine Kugel-Kontur haben. Der Rotor 16 wird von einer zentrale Motorwelle 18 getragen, die in Betrachtungsrichtung rechts den Ventilator 32 trägt, der stufenzylindrisch aufgebaut ist und aus einem großen und einem kleinen Zylinder 35, 37 besteht. Dabei wird der kleine Zylinder 37 aus auf einem Teilkreis axial nach links aus dem großen Zylinder 35 austretenden Stäben 39 gebildet, die den Wickelkopf 17 käfigartig nur radial aussen umgreifen. Diese bilden dort durch ihre Luftverwirbelung und eng benachbarte Anordnung einen wirksamem Aufprallschutz gegen angesaugten Staub. Dieser wird entsprechend dem Strömungspfeil 38 zwischen dem Rotor 16 und dem Stator 15 hindurch gesaugt und am Ventilator 321 zunächst an der Leitrippe 44 vorbei radial nach innen und radial nach aussen beschleunigt und sodann axial nach vorn ausgeworfen, ohne den Wickelkopf 17 zu berühren.

In Figur 4 zeigt eine Handwerkzeugmaschine 110 mit einem Motor 141, die sich nur durch die Ausgestaltung des Ventilators 322 von Figur 3 unterscheidet. Der Ventilator 322 ist hier mit einem axialen Überstand 40 versehen, der als kleiner Zylinder 37 aus engmaschigem Drahtnetz besteht, besonders staubabweisend aber luftdurchlässig ist und somit gute Kühlung mit Schutz gegen abrasiven Staub verbindet.

## Patentansprüche

1. Elektro-Handwerkzeugmaschine mit einem Gehäuse (12), das einen Elektromotor (14, 140, 141) mit Motorwelle (18) aufnimmt, der einen Rotor (16) mit Wickelkopf (17) und einem drehsicher auf der Motorwelle (18) gehaltenen Ventilator aufweist, der benachbart zum Wickelkopf (17) sitzt, **dadurch gekennzeichnet, dass** sich der Ventilator (32) - zumindest bereichsweise - axial mit minimalem Spalt zur Stirnseite des Wickelkopfs (17) hin beabstanded ist.

2. Elektro-Handwerkzeugmaschine nach Anspruch 1, **dadurch gekennzeichnet, dass** die dem Wickelkopf (17) des Rotors (16) zugewandte Seite des Ventilators (32) der Kontur des Wickelkopfs (17) folgt und sich axial daran abstützt.

3. Elektro-Handwerkzeugmaschine nach Anspruch 1 oder 2, **dadurch gekennzeichnet, dass** die dem Wickelkopf (17) zugewandte Seite des Ventilators (32) aus den Stirnseiten von Ventilatorblättern (42) gebildet werden.

4. Handwerkzeugmaschine nach Anspruch 1 oder 2, **dadurch gekennzeichnet, dass** der Ventilator (32) auf der dem Wickelkopf (17) zugewandten Seite Rippen (39) trägt, insbesondere runde Stäbe, die sich dicht bis an die Kontur des Wickelkopfs (17) erstrecken.

5. Handwerkzeugmaschine nach Anspruch 4, **dadurch gekennzeichnet, dass** die Rippen (39) auf einem Teilkreis angeordnet sind und sich parallel zur Achse des Ventilators (32) erstrecken.

6. Handwerkzeugmaschine nach Anspruch 5, **dadurch gekennzeichnet, dass** der Teilkreisdurchmesser kleiner oder gleich dem Außendurchmesser des Rotors (16) ist.

7. Handwerkzeugmaschine nach einem der vorhergehenden Ansprüche, **dadurch gekennzeichnet, dass** die Ventilatorblätter (42) auf der dem Wickelkopf (17) zugewandten Seite eine stirnseitige konkav gewölbte Vertiefung aufweisen, die dem Negativabdruck der kalottenförmigen Kontur des Wickelkopfs (17) entspricht.
